# EUROPEAN PATENT SPECIFICATION

(11) **EP 2 481 908 B1**
(45) Date of publication and mention of the grant of the patent: **02.09.2020**
(21) Application number: 12153108.1
(22) Date of filing: 30.01.2012
(51) Int. Cl.: F02M 26/14, F02M 26/35, F02M 26/41, F02B 47/08, F01N 1/00

(54) **Exhaust gas recirculation system**
Abgasrückführungssystem
Système de recyclage de gaz d'échappement

(30) Priority: 31.01.2011 JP 2011017607
(43) Date of publication of application: 01.08.2012
(73) Proprietor: Mitsubishi Jidosha Kogyo Kabushiki Kaisha, Tokyo 108-8410 (JP)
(72) Inventor: Kimura, Hiroyuki, Tokyo, 108-8410 (JP)
(74) Representative: Vossius & Partner Patentanwälte Rechtsanwälte mbB

(56) References cited:
- EP-A1- 1 905 654
- EP-A2- 1 331 388
- EP-A2- 1 703 116
- JP-A- 2003 035 137
- JP-A- 2010 065 552
- US-B1- 6 422 215

## Description

The present invention is related to an exhaust gas recirculation system for an internal combustion engine mounted in a vehicle, for example.

Conventionally, there is a provided an exhaust gas recirculation system for returning a part of exhaust gas to an induction passage to reduce nitrogen oxide (NOx) discharged from an internal combustion engine. An increase in temperature inside combustion chambers is suppressed by supplying a part of exhaust gas to the combustion chambers, and therefore a production of NOx is suppressed.

On the other hand, depending on driving conditions of the internal combustion engine, there may occur a situation in which unburned fuel and soot are contained in exhaust gas. Deposits are accumulated in a flow passage in the exhaust gas recirculation system when unburned fuel and soot contained in exhaust gas are combined together.

Because of this, the exhaust gas recirculation system includes a catalyst for purifying exhaust gas. The catalyst is sufficiently operated by being heated to an activation temperature. There have been proposed techniques to bring a housing accommodating such a catalyst into contact with an exhaust manifold to raise the temperature of the catalyst quickly to the activation temperature, refer to JP-A-2006-257905.

The housing accommodating the catalyst and the exhaust manifold thermally expands when heated by hot exhaust gas. Thermal expansion of the exhaust manifold is different from that of the catalyst housing. In the construction disclosed in JP-A-2006-257905 in which the catalyst housing is in contact with the exhaust manifold, the exhaust manifold and the catalyst housing are pressed against each other at the contact portion therebetween due to the difference in thermal expansion between the catalyst housing and the exhaust manifold, and hence, a large load is imposed on the contact portion.

It is therefore an object of the invention to provide an exhaust gas recirculation system which can suppress a load thereon while being able to activate a catalyst quickly.

The object above can be achieved by the features specified in the claims.

Particularly, according to a one aspect of the invention, there is provided an exhaust gas recirculation system comprising:
an exhaust manifold, communicating with a combustion chamber of an internal combustion engine, and forming a part of an exhaust system;
an exhaust gas recirculation passage for introducing exhaust gas from the exhaust system to an induction passage;
a catalytic converter, provided in the exhaust gas recirculation passage, and disposed in a position which is spaced away from the exhaust manifold and where at least part of the catalytic converter is superposed on the exhaust manifold in a vertical direction of a vehicle body; and
a cover member, covering the exhaust manifold and the catalytic converter, the cover member includes a vertical wall which is disposed on an opposite side to the internal combustion engine and extends downward at least to a position of a lower end of the exhaust manifold in the vertical direction.

The internal combustion engine may include at least two combustion chambers. The exhaust manifold may include: branch portions which communicate correspondingly with the combustion chambers; and a merging portion where the branch portions merge together. At least part of the catalytic converter may be superposed on the merging portion in the vertical direction of the vehicle body.

The catalytic converter may include at least one fin which is exposed inside the cover member.

The exhaust gas recirculation passage may include a corrugated passage portion having a corrugated shape at least either upstream or downstream of the catalytic converter.

The corrugated passage portion may communicate with the catalytic converter at each of an upstream and downstream of the catalytic converter.

The exhaust gas recirculation system may further comprise a cooling unit, configured to commonly use a coolant for cooling the combustion chambers, and provided in the exhaust gas recirculation passage so as to cool the exhaust gas.

The exhaust gas recirculation passage may include a bypass passage which bypasses the cooling unit.

According to the invention, there can be provided the exhaust gas recirculation system which can suppress the load thereon while being able to activate the catalytic converter quickly.

The invention is described in detail in conjunction with the drawings, in which:
Fig. 1 is a schematic diagram showing an internal combustion engine system including an exhaust gas recirculation system according to a first embodiment of the invention,
Fig. 2 is a sectional view of the internal combustion engine system taken along the line F2-F2 shown in Fig. 1,
Fig. 3 is a plan view of a cover member shown in Fig. 2 as seen from an upper side thereof along a vertical direction of a vehicle body,
Fig. 4 is a sectional view of the exhaust gas recirculation system taken along the line F4-F4 shown in Fig. 2,
Fig. 5 is a sectional view of the exhaust gas recirculation system taken along in the same way as done in Fig. 4, which shows a state in which an opening is opened,
Fig. 6 is a schematic diagram showing an internal combustion engine system including an exhaust gas recirculation system according to a second embodiment of the invention, and
Fig. 7 is a schematic diagram showing an internal combustion engine system including an exhaust gas recirculation system according to a third embodiment of the invention.

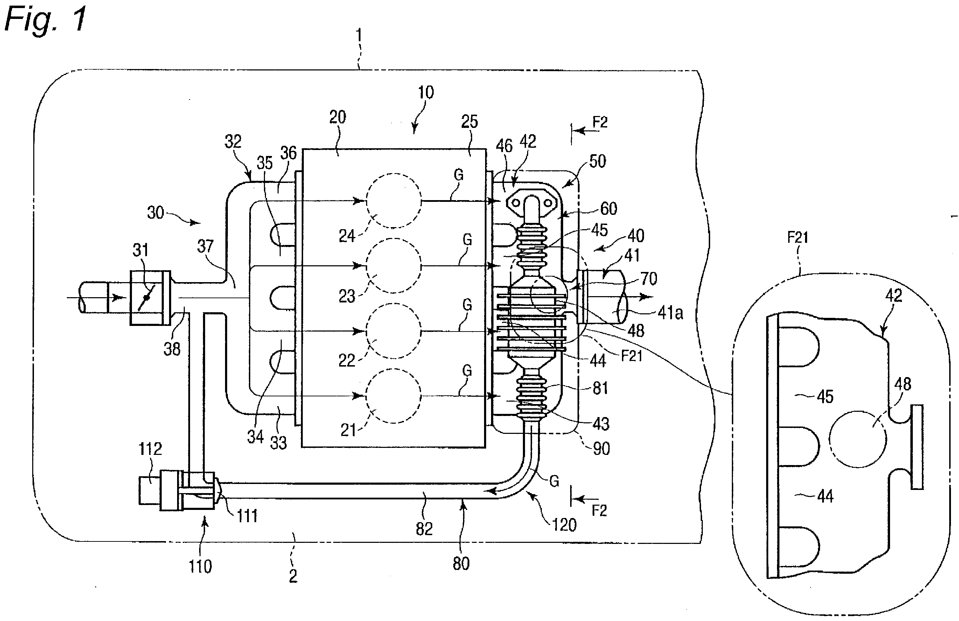

Referring to Figs. 1 to 5, an exhaust gas recirculation system according to a first embodiment of the invention will be described. Fig. 1 shows an internal combustion engine system 10. As Fig. 1 shows, the internal combustion engine system 10 includes an internal combustion engine 20, an induction system 30, an exhaust system 40 and an exhaust gas recirculation system 50. The internal combustion engine 20 is mounted in a motor vehicle 1. The motor vehicle 1 is an example of a vehicle which includes an exhaust gas recirculation system. The vehicle includes wheels which are assembled to a vehicle body.

In Fig. 1, an outline of an engine compartment 2 of the motor vehicle 1 is indicated by a long dashed double-short dashed line. The motor vehicle 1 can run by driving the wheels with a rotational force obtained from a crankshaft, not shown, of the internal combustion engine 20. In this embodiment, the internal combustion engine 20 is described as an example of a reciprocating four-cylinder internal combustion engine and includes combustion chambers 21 to 24. The internal combustion engine 20 includes a cylinder head 25 and a cylinder block, not shown. In Fig. 1, the combustion chambers 21 to 24 are indicated by dashed lines.

The induction system 30 includes an induction passage 38 which guides air or a mixture of air and exhaust gas G which are returned to the induction system 30 by the exhaust gas recirculation system 50, which will be described later, to the combustion chambers 21 to 24 and a throttle valve 31. The induction passage 38 includes an induction manifold 32. The induction manifold 32 is fixed to the cylinder head 25 and includes branch portions 33 to 36 which communicate with the combustion chambers 21 to 24, respectively and a merging portion 37 where the branch portions 33 to 36 merge together. The merging portion 37 is a portion where the branch portions 33 to 36 merge into one.

In the induction passage 38, the throttle valve 31 is provided upstream of the induction manifold 32. The throttle valve 31 controls the amount of air or the mixture of air and exhaust gas G which is supplied to the combustion chambers 21 to 24 by controlling the opening thereof.

The exhaust system 40 includes an exhaust passage 41 which communicates with the combustion chambers 21 to 24. The exhaust passage 41 includes an exhaust manifold 42. The exhaust manifold 42 communicates with the combustion chambers 21 to 24. The exhaust manifold 42 includes branch portions 43 to 46 which communicate correspondingly with the combustion chambers 21 to 24 and a merging portion 48 where the branch portions 43 to 46 merge together. The merging portion 48 is a portion where the branch portions 43 to 46 merge into one. In Fig. 1, the merging portion 48 is surrounded by a long dashed double-short dashed line. In addition, in Fig. 1, the merging portion 48 and an area F21 indicated by a chain double-dashed line which lies in the vicinity of the merging portion of the exhaust manifold 42 are shown in an enlarged fashion. The merging portion 48 is indicated by a long dashed double-short dashed line also in the area F21.

In Fig. 1, other portions 41a than the exhaust manifold 42 of the exhaust passage 41 are shown only partially. The exhaust manifold 42 will be described specifically later.

The internal combustion engine 20 is fixedly disposed so that the exhaust manifold 42 is positioned further rearwards than the induction manifold 32 on a vehicle body and that a direction in which the combustion chambers 21 to 24 are aligned follows a transverse direction of the vehicle body.

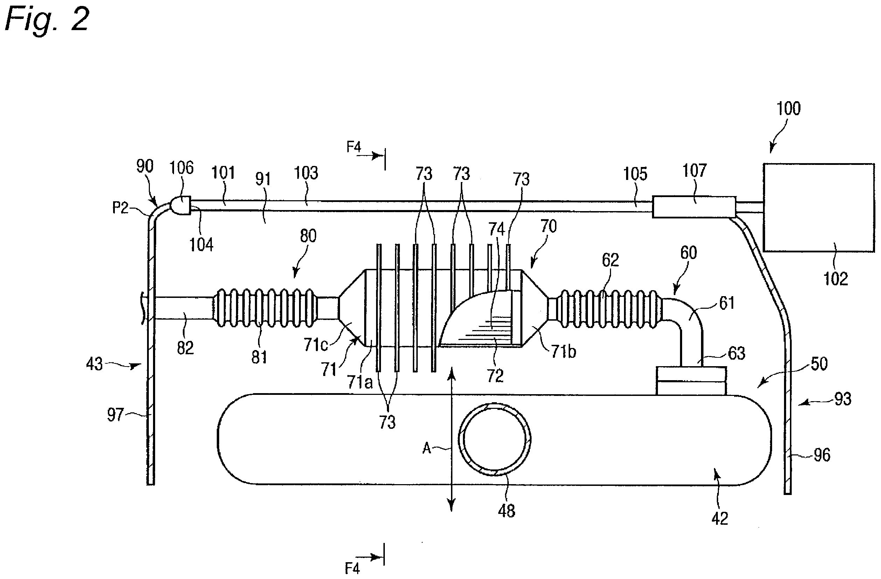

Fig. 2 is a sectional view of the internal combustion engine system 10 taken along the line F2-F2 shown in Fig. 1. Fig. 2 shows an inside of the exhaust gas recirculation system 50. As is shown in Figs. 1, 2, the exhaust gas recirculation system 50 guides part of exhaust gas G discharged from the combustion chambers 21 to 24 into the induction system 30.

The exhaust gas recirculation system 50 includes the exhaust manifold 42, an upstream-side exhaust gas recirculation passage 60, a catalytic converter 70, a downstream-side exhaust gas recirculation passage 80, a cover member 90, an opening and closing unit 100 for opening and closing an opening 91 formed in the cover member 90, and an exhaust gas recirculation system valve unit 110.

The upstream-side exhaust recirculation passage 60 communicates with the exhaust manifold 42 and the catalytic converter 70. The downstream-side exhaust gas recirculation passage 80 communicates with the catalytic converter 70 and the induction passage 38. The upstream-side exhaust gas recirculation passage 60, the catalytic converter 70 and the downstream-side exhaust gas recirculation passage 80 form an exhaust gas recirculation passage 120 which guides exhaust gas G into the induction system 30.

As is shown in Figs. 1 and 2, in the exhaust manifold 42, branch portions 43 to 46 are aligned in the transverse direction of the vehicle body, and therefore, the exhaust manifold 42 is long in the transverse direction of the vehicle body. The merging portion 48 is disposed in the center of the exhaust manifold 42 with respect to the direction in which the branch portions 43 to 46 are aligned (in this embodiment, the transverse direction of the vehicle body).

The upstream-side exhaust gas recirculation passage 60 includes a first connecting passage portion 61 and an upstream-side corrugated tube member 62. The first connecting passage portion 61 is formed of a tube member, for example. An upstream end 63 of the first connecting passage portion 61 communicates with the branch portion 46 of the plurality of branch portions 43 to 46 of the exhaust manifold 42 which is disposed at one end of the direction in which the branch portions 43 to 46 are aligned. In addition, the first connecting passage portion 61 is fixed to an upper wall portion of the branch portion 46 as viewed in a vertical direction of the vehicle body.

Here, the vertical direction A of the vehicle body will be described. The vertical direction A of the vehicle body is a direction parallel to a direction in which gravity works when a vehicle (in this embodiment, the motor vehicle 1) including the exhaust gas recirculation system 50 is disposed on a flat plane which is vertical to the direction in which gravity works. Then, the direction in which gravity works is referred to as a downward direction, and a direction opposite to the direction in which gravity works is referred to as an upward direction.

The description of the exhaust gas recirculation system 50 will be resumed. The first connecting passage portion 61 extends in the direction in which the branch portions 43 to 46 are aligned above the exhaust manifold 42 in the upward direction of the vehicle body. The whole of the first connecting passage portion 61 is superposed on the exhaust manifold 42 in the vertical direction A of the vehicle body as is shown in Figs. 1, 2.
"Superpose"' above refers to the relationship of the positions of the both elements when seen from the top. This also applies to the description hereafter.

The upstream-side corrugated tube member 62 communicates with a downstream end of the first connecting passage portion 61. The upstream-side corrugated tube member 62 is disposed above the exhaust manifold 42 in the vertical direction A of the vehicle body. The upstream-side corrugated tube member 62 extends in the direction in which the branch portions 43 to 46 are aligned. The whole of the upstream-side corrugated tube member 62 is superposed above the exhaust manifold 42 in the vertical direction A of the vehicle body. The upstream-side corrugated tube member 62 has a corrugated configuration, and therefore, the upstream-side corrugated tube member 62 can extend and contract in a direction in which it extends. A downstream end of the upstream-side corrugated tube member 62 communicates with the catalytic converter 70.

The catalytic converter 70 is disposed above the exhaust manifold 42 in the vertical direction A of the vehicle body. It should be noted that the catalytic converter 70 is not in contact with the exhaust manifold 42. The catalytic converter 70 includes a housing 71, a catalyst 72 and a plurality of fins 73. The housing 71 includes a main body portion 71a which accommodates the catalyst 72, which will be described later, an upstream-side communicating portion 71b which communicates with the upstream-side corrugated tube member 62 and a downstream-side communicating portion 71c which communicates with the downstream-side exhaust gas recirculation passage 80, which will be described later. The main body portion 71 a has a circular cylindrical shape, for example.

The catalyst 72 is accommodated in an interior of the main body portion 71a of the housing 71. In Fig. 2, the main body portion 71a is partially cutaway, so that part of the catalyst 72 which is accommodated in the interior of the main body portion 71a is shown. The upstream-side communicating portion 71b communicates with the downstream end of the upstream-side corrugated tube member 62. The substantial whole of the catalytic converter 70 (the housing 71) is superposed above the exhaust manifold 42 in the vertical direction A of the vehicle body. Note that the whole of the catalytic converter 70 may be superposed above the exhaust manifold 42 in the vertical direction A of the vehicle body. The substantial whole of the catalyst 72 is superposed above the exhaust manifold 2 in the vertical direction A of the vehicle body. Note that the whole of the catalyst 72 may be superposed above the exhaust manifold 42 in the vertical direction A of the vehicle body. In addition, an upstream-side end portion 74 of the main body portion 71a of the housing 71 is superposed above the merging portion 48 of the exhaust manifold 42 in the vertical direction A of the vehicle body. Because of this, an upstream-side end portion of the catalyst 72 is superposed above the exhaust manifold 42 in the vertical direction A of the vehicle body.

The plurality of fins 73 each have a through hole through which the catalyst housing 71 fittingly passes in an inside thereof. The whole of an edge portion of the through hole is in contact with an outer circumferential surface of the catalyst housing 71. The fins 73 extend in the vertical direction A of the vehicle body and are disposed so as to be spaced apart from each other in the direction in which the catalyst housing 71 extends. The fins 73 are disposed uniformly on the main body portion 71a. The fins 73 are not in contact with the exhaust manifold 42.

A space between the fins 73 and the exhaust manifold 42 will be described. When the internal combustion engine 20 starts to operate and exhaust gas G flows in the exhaust manifold 42 and the catalytic converter 70, the exhaust manifold 42 and the catalyst housing 71 thermally expand due to the heat of exhaust gas G. A space between the fins 73 and the exhaust manifold 42 when the catalyst housing 71 and the exhaust manifold 42 do not thermally expand is set so that the fins 73 and the exhaust manifold 42 are prevented from being brought into contact with each other even when the catalyst housing 71 and the exhaust manifold 42 thermally expand during the operation of the internal combustion engine 20. This space can be obtained through experiments.

As is shown in Fig. 1, the downstream-side exhaust gas recirculation passage 80 includes a downstream-side corrugated tube member 81 and a second connecting passage portion 82. As is shown in Fig. 2, an upstream end of the downstream-side corrugated tube member 81 communicates with the downstream-side communicating portion 71c of the catalyst housing 71 of the catalytic converter 70. As is shown in Figs. 1, 2, the downstream-side corrugated tube member 81 is disposed above the exhaust manifold 42 in the vertical direction A of the vehicle body. Then, the substantial whole of the downstream-side corrugated tube member 81 is superposed above the exhaust manifold 42 in the vertical direction A of the vehicle body. Note that the whole of the downstream-side corrugated tube member 81 may be superposed above the exhaust manifold 42 as the upstream-side corrugated tube member 62 is done. The downstream-side corrugated tube member 81 extends in the direction the branch portions 43 to 46 are aligned. The downstream-side corrugated tube member 81 can expand and contract in the direction in which the same tube member extends.

The second connecting passage portion 82 is formed of a tube member, for example. The second connecting passage portion 82 communicates with a downstream end of the downstream-side corrugated tube member 81. As is shown in Fig. 1, the second connecting passage portion 82 communicates with the induction system 30 in a position which lies downstream of the throttle valve 31 and upstream of the induction manifold 32. An exhaust gas recirculation system valve unit 110 is provided along the length of the second connecting passage portion 82.

The exhaust gas recirculation system valve unit 110 opens and closes a flow line within the second connecting passage portion 82 and includes a valve 111 for controlling the opening of the second connecting passage 82 and a driving portion 112 for driving the valve 111. The flow line within the second connecting passage portion 82 is opened or closed or the opening of the flow line within the second connecting passage portion 82 is controlled by the valve 111 which is operated by the driving portion 112, whereby the amount of exhaust gas G guided into the induction system 30 is controlled. The operation of the exhaust gas recirculation system valve unit 110 is implemented by a control unit, not shown.

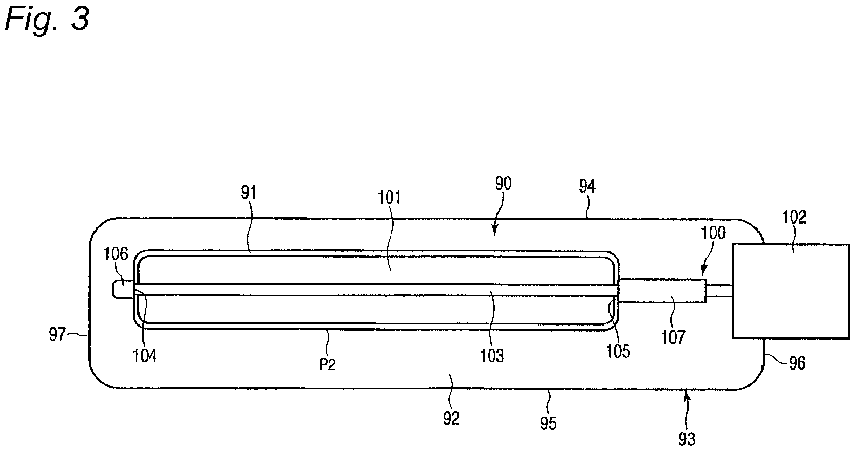

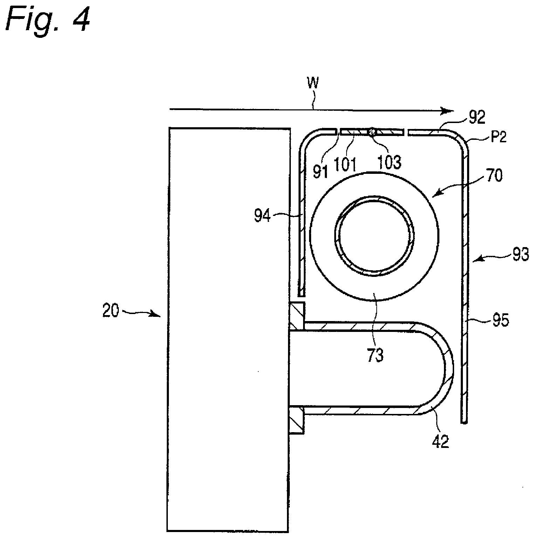

In Fig. 1, the cover member 90 is indicated by a chain double-dashed line. Fig. 3 is a plan view of the cover member 90 as viewed from an upper side thereof along the vertical direction A of the vehicle body. As is shown in Figs. 1 to 3, the cover member 90 covers the whole of the exhaust manifold 42, the whole of the upstream-side exhaust gas recirculation passage 60, the whole of the downstream-side corrugated tube member 81 and an upstream end portion of the second connecting passage portion 82. Fig. 4 is a sectional view of the exhaust gas recirculation system 50 taken along the line F4-F4 shown in Fig. 2. As is shown in Figs. 1 to 4, the cover member 90 includes an upper wall portion 92 which is positioned upwards in the vertical direction A of the vehicle body and a circumferential wall portion 93. The cover member 90 is fixed to the exhaust manifold 42, for example, by a bracket, not shown.

The circumferential wall portion 93 includes a first vertical wall portion 94 which is disposed between the catalytic converter 70 and the internal combustion engine 20, a second vertical wall portion 95 which is disposed on an opposite side to the first vertical wall portion 94 which faces the internal combustion engine 20 across the catalytic converter 70, and third and fourth vertical wall portions 96, 97 which connect the first and second vertical wall portions 94, 95 together.

As Fig. 4 shows, the first vertical wall portion 94 extends upwards in the vertical direction A of the exhaust manifold 42 from an upper end thereof. A space between a lower end of the first vertical wall portion 94 and the exhaust manifold 42 is small. Alternatively, the lower end of the first vertical wall portion 94 may be fixed to the exhaust manifold 42 with no space defined therebetween. The second to fourth vertical wall portions 95 to 97 extend downwards to substantially the same position as a lower end of the exhaust manifold 42 along the vertical direction A of the vehicle body. Alternatively, the second to fourth vertical wall portions 95 to 97 may extend downwards to the same position as the lower end of the exhaust manifold 42 or a position which lies further downwards than the lower end of the exhaust manifold 42. A space between the second vertical wall portion 95 and the exhaust manifold 42 is small. Alternatively, the second vertical wall portion 95 may be in contact with the exhaust manifold 42, and therefore, there may be provided no space between the exhaust manifold and the second vertical wall portion 95.

Similarly, there may be provided no space between the third and fourth vertical wall portions 96, 97 and the exhaust manifold 42. In other words, there may be provided no space between the cover member 90 and the exhaust manifold 42.

The upper wall portion 92 is provided at an upper end of the circumferential wall portion 93 so as to cover the upper end of the circumferential wall portion 93. As Figs. 2 and 3 show, the opening 91 is provided in the upper wall portion 92. The opening 91 has a size in which the opening 91 overlaps at least part of the catalyst 72 in the catalytic converter 70 in the vertical direction A of the vehicle body. In this embodiment, the opening 91 is formed into an elongated shape which is elongated in the direction in which the branch portions 43 to 46 are aligned.

The opening and closing unit 100 is provided in the opening 91. The opening and closing unit 100 opens and closes the opening 91. As an example, the opening and closing unit 100 includes a door member 101 which covers the opening 91, and a driving unit 102 which changes the posture and position of the door member 101 to thereby switch the conditions of the door member 101 between a condition where the opening 91 is opened and a condition where the opening 91 is covered by the door member 101 so as to be closed.

As viewed in the vertical direction A of the vehicle body (Fig. 3), the door member 101 is slightly smaller than the opening 91. The door member 101 has a rotational shaft 103. The rotational shaft 103 extends in the direction in which the branch portions 43 to 46 are aligned. Both end portions 104, 105 of the rotational shaft 103 project to the outside of the opening 91 when the door member 101 is set in the opening 91. The rotational shaft 103 is disposed in the center of the door member 101 with respect to a direction which is at right angles to a longitudinal direction of the door member 101. Bearing portions 106, 107 for supporting rotatably both the end portions 104, 105 of the rotational shaft 103 are provided in an edge portion of the opening 91.

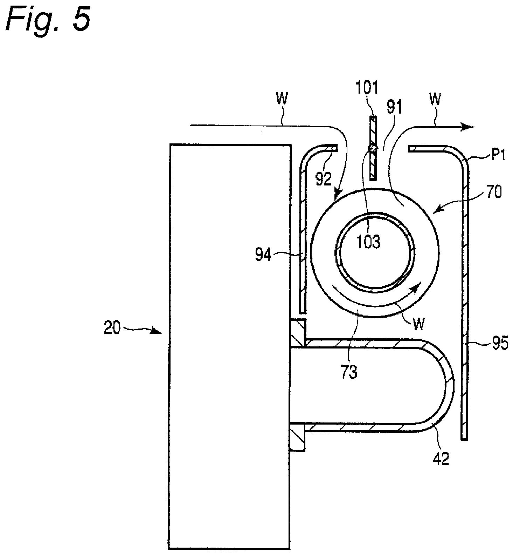

When the door member 101 rotates around the rotational shaft 103 with both the end portions 104, 105 of the rotational shaft 103 supported in the bearing portions 106, 107, respectively, the state of the opening 91 is switched between an open state P1 in which the opening 91 is opened and a closed state P2 in which the opening 91 is closed. In the state shown in Figs. 3 and 4, the opening 91 is in the closed state P2. Fig. 5 shows a sectional view of the exhaust gas recirculation system 50 taken in the same manner as done in Fig. 4, showing that the opening 91 is in the closed state P2. In such a state that the opening 91 is opened, the posture of the door member 101 follows along the vertical direction A of the vehicle body.

The driving unit 102 is an actuator for rotationally driving the rotational shaft 103. In this embodiment, an electric motor is used as an example of an actuator. The rotational shaft 103 is rotated by the driving unit 102. The operation of the driving unit 102 is controlled by the control unit, not shown.

Next, the operation of the exhaust gas recirculation system 50 will be described. When the internal combustion engine 20 starts to operate, the exhaust manifold 42 is heated to a high temperature by the heat of exhaust gas G. Air surrounding the exhaust manifold 42 is heated to a high temperature by the heated manifold 42. The periphery of the cover member 90 is surrounded by the exhaust manifold 42, and therefore, the heat of the exhaust manifold 42 is transmitted to the air surrounding the periphery of the exhaust manifold 42 (the air inside the cover member 90) with good efficiency. Because of this, even when the temperature of exhaust gas G is low as when the internal combustion engine 20 starts to operate, the temperature inside the cover member 90 is increased quickly.

The air so heated flows upwards along the vertical direction A of the vehicle body and strikes the catalytic converter 70. When the heated air strikes the catalytic converter 70, the catalytic converter 70 (the catalyst 72) is heated. As described above, even when the temperature of exhaust gas G is low as when the internal combustion engine 20 starts to operate, the catalyst 72 is heated with good efficiency. In addition, when radiated heat radiated from the exhaust manifold 42 reaches the catalytic converter 70, the catalyst 72 is heated. In addition, the plurality of fins 73 are provided on the catalyst housing 71, whereby the surface area which receives the heat of the catalytic converter 70, and therefore, the catalyst 72 is heated more quickly.

The air heated by the exhaust manifold 42 and the radiated heat radiated from the exhaust manifold 42 heat the upstream-side exhaust gas recirculation passage 60 and the downstream-side exhaust gas recirculation passage 80 as they heat the catalyst 72. The upstream-side exhaust gas recirculation passage 60 is formed by the first connecting passage portion 61 and the upstream-side corrugated tube member 62. The downstream-side exhaust gas recirculation passage 80 is formed by a part of the second connecting passage portion 82 and the downstream-side corrugated tube member 81.

The upstream-side corrugated tube member 62 has a large surface area due to it having the corrugated configuration. Because of this, the heat supplied from the exhaust manifold 42 is transmitted to the upstream-side corrugated tube member 62 with good efficiency, and therefore, the upstream-side corrugated tube member 62 is heated quickly. As a result of this, exhaust gas G guided to the catalyst 72 can be heated, thereby making it possible to increase the heat of the catalyst 72 quickly.

The first connecting passage portion 61, the upstream-side corrugated tube member 62, the catalyst housing 71 of the catalytic converter 70, the downstream-side corrugated tube member 81 and the second connecting passage portion 82 thermally expand by being heated. The upstream-side corrugated tube member 62 and the downstream-side corrugated tube member 81 have the corrugated configuration which enables them to expand and contract in the direction in which the first connecting passage portion 61, the upstream-side corrugated member 62, the catalyst housing 71 of the catalytic converter 70, the downstream-side corrugated tube member 81 and the second connecting passage portion 82 are aligned. Because of this, The upstream-side corrugated tube member 62 and the downstream-side corrugated tube member 81 expand or contract in association with thermal expansions of the respective constituent elements. By doing this, the thermal expansion of the constituent elements is absorbed.

When the control unit, not shown, determines that a situation arises in which exhaust gas G is introduced into the combustion chambers 21 to 24, the valve 111 of the exhaust gas recirculation system valve unit 110 is opened and the opening thereof is controlled in accordance with the amount of exhaust gas G to be introduced. With the valve 111 closed, no exhaust gas G is introduced into the induction system 30.

When the valve 111 is opened, a part of exhaust gas G which flows in the exhaust manifold 42 is guided into the induction system 30 by way of the exhaust gas recirculation passage 120. The exhaust gas G which flow through the exhaust gas recirculation passage 120 is purified when they pass through the catalyst 72. The purified exhaust gas G is guided into the combustion chambers 21 to 24.

The completion of warming up the internal combustion engine 20 is detected by a detection unit (a coolant temperature sensor for example), and the result of the detection is transmitted to the control unit, not shown. Determining that the internal combustion engine 20 has been warmed up completely, the control unit drives the driving unit 102 so as to rotate the door member 101 to thereby put the opening 91 in the open state P1.

When the opening 91 is put in the open state P1, air outside the cover member 90 is guided into the inside of the cover member 90 through the opening 91. The catalyst 72 is cooled by the air guided into the inside of the cover member 90. When the motor vehicle 1 is running, the door member 101 takes the posture following the vertical direction A of the vehicle body, whereby running air W is supplied from the front of the vehicle body so as to strike the door member 101 to thereby be guided into the inside of the cover member 90. The running air flows through the inside of the cover member 90 and is thereafter discharged from the opening 91. The door member 101 functions as a guide which guides running air W into the inside of the cover member 90.

When the temperature inside the cover member 90 decreases to a low temperature, the thermal expansion of the constituent elements which are accommodated inside the cover member 90 is stopped and the constituent elements start to contract. When the constituent elements inside the cover member 90 contract, the upstream-side corrugated tube member 62 and the downstream-side corrugated tube member 81 extend to absorb the change made by thermal expansion is absorbed.

In addition, the downstream-side corrugated tube member 81 has the corrugated configuration and hence has the large surface area. Therefore, the exhaust gas G which is heated by the catalytic reaction heat when they pass through the catalyst 72 is cooled by opening the opening 91.

In the exhaust gas recirculation system 50 that is configured as has been described heretofore, the exhaust manifold 42 and the catalyst 72 are accommodated inside the cover member 90, whereby air surrounding the exhaust manifold 42 is heated with good efficiency. Further, the catalytic converter 70 overlaps the exhaust manifold 42 thereabove in the vertical direction A of the vehicle body, air heated by the exhaust manifold 42 strikes the catalytic converter 70. As a result of this, the heat of the exhaust manifold 42 is used with good efficiency to heat the catalytic converter 70, thereby making it possible to heat the catalyst 72 to its activation temperature quickly. In addition, there never occurs such a situation that the catalytic converter 70 is brought into direct contact with the exhaust manifold 42, thereby making it possible to prevent the occurrence of a load that would otherwise be produced by the contact of the catalytic converter 70 and the exhaust manifold 42.

When referred to herein, the load is a load imposed on the exhaust manifold 42 and a load imposed on the catalytic converter 70 due to a contact portion of the exhaust manifold 42 and a contact portion of the catalytic converter 70 being caused to press against each other by thermal expansion.

Further, the substantial whole of the catalytic converter 70 is superposed above the exhaust manifold 42 in the vertical direction A of the vehicle body, whereby the heat of the exhaust manifold 42 is transmitted to the catalyst 72 with good efficiency. In addition, at least part of the catalytic converter 70 is superposed above the exhaust manifold 42 in the vertical direction A of the vehicle body, whereby air heated by the exhaust manifold 42 strikes the catalytic converter 70, and the heat of the exhaust manifold 42 is transmitted to the catalyst 72 with good efficiency. Preferably, the whole of the catalytic converter 70 is superposed above the exhaust manifold 42 in the vertical direction A of the vehicle body, whereby the heat of the exhaust manifold 42 is transmitted to the catalyst 72 with better efficiency.

Further, the substantial whole of the catalyst 72 is superposed above the exhaust manifold 42 in the vertical direction A of the vehicle body, whereby the catalyst 72 is heated with good efficiency. In addition, at least part of the catalyst 72 is superposed above the exhaust manifold 42 in the vertical direction A of the vehicle body, whereby the heat of the exhaust manifold 42 is transmitted to the catalyst 72 with good efficiency. Preferably, the whole of the catalyst 72 is superposed above the exhaust manifold 42 in the vertical direction A of the vehicle body, whereby the heat of the exhaust manifold 42 is transmitted to the catalyst 72 with better efficiency.

The upstream-side corrugated tube member 62 is used not only to heat the catalyst 72 quickly by heating exhaust gas G which is to be guided to the catalyst 72 but also to absorb the thermal expansion of the constituent components accommodated inside the cover member 90.

In addition, the downstream-side corrugated tube member 81 is used not only to cool the exhaust gas G which is heated by the reaction heat of the catalyst 72 by opening the opening 91 but also to absorb the thermal expansion of the constituent components accommodated inside the cover member 90.

In addition, at least part of the catalytic converter 70 (the upstream-side end portion 74 in this embodiment) is superposed above the merging portion 48 of the exhaust manifold 42 in the vertical direction A of the vehicle body, whereby the catalyst 72 is heated with good efficiency. This feature will be described specifically. The branch portions 43 to 46 merge together at the merging portion 48, and therefore, when the internal combustion engine 20 is operating, exhaust gas G always flows through the merging portion 48. Because of this, the catalyst 72 is heated with good efficiency by being superposed above the merging portion 48 in the vertical direction A of the vehicle body. Further, the catalyst 72 is heated with good efficiency by at least part of the catalyst 72 (the upstream-side end portion) being superposed above the merging portion 48 in the vertical direction A of the vehicle body.

In addition, the plurality of fins 73 are provided on the catalyst housing 71 of the catalytic converter 70, whereby the heat of the exhaust manifold 42 is transmitted to the catalyst 72 with good efficiency, thereby making it possible to heat the catalyst 72 with good efficiency. In this embodiment, although the plurality of fins 73 are provided, for example, only one fin 73 may be provided. By providing at least one fin 73, the catalyst 72 is heated with good efficiency. In the event that a plurality of fins 73 are provided as done in this embodiment, the catalyst 72 is heated with better efficiency.

In addition, the opening and closing unit 100 is provided in the cover member 90, whereby when the catalyst 72 is heated to a high temperature, the catalyst 72 can be cooled by air outside the cover member 90. Specifically, the catalyst 72 can be cooled when a temperature of the catalyst 72 surpasses the activation temperature of the catalyst 72.

After the internal combustion engine 20 has been warmed up completely, there remains little unburned fuel or CO in exhaust gas G, and therefore, even when the catalyst 72 is cooled down to a temperature which is lower than the activation temperature thereof, there occurs no such situation that the exhaust gas recirculation system 50 and the induction system 30 get dirty due to the exhaust gas G.

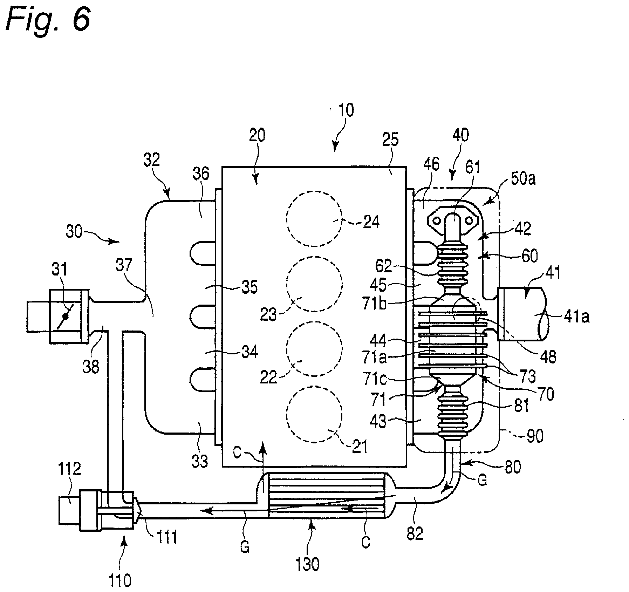

Next, referring to Fig. 6, an exhaust gas recirculation system according to a second embodiment of the invention will be described. Like reference numerals are given to like functional configurations to those of the first embodiment, and the description thereof will be omitted. The second embodiment differs from the first embodiment only in that an exhaust gas recirculation system cooler 130 is provided. The other constructions remain the same as those of the first embodiment. The different feature will be described specifically.

Reference numeral 50a is given to the exhaust gas recirculation system of this embodiment. As has been described above, the exhaust gas recirculation system 50a differs from the exhaust gas recirculation system 50 descried in the first embodiment only in that the exhaust gas recirculation system cooler 130 is provided. The other constructions of the exhaust gas recirculation system 50a remain the same as those of the exhaust gas recirculation system 50 of the first embodiment.

Fig. 6 is a plan view showing the exhaust gas recirculation system 50a. As Fig. 6 shows, in addition to the constituent components of the exhaust gas recirculation system 50 described in the first embodiment, the exhaust gas recirculation system 50a includes the exhaust gas recirculation system cooler 130.

The exhaust gas recirculation system cooler 130 is incorporated in a second connecting passage portion 82 and is provided in a position lying downstream of a downstream-side corrugated tube member 81 and upstream of a valve 111. Exhaust gas G flows in the exhaust gas recirculation system cooler 130. The exhaust gas recirculation system cooler 130 is disposed outside a cover member 90. The exhaust gas recirculation system cooler 130 is an example of a cooling unit for cooling exhaust gas.

The exhaust gas recirculation system cooler 130 uses a coolant C as an example of a refrigerant to thereby cool exhaust gas G which flows in an interior thereof. The coolant C used in the exhaust gas recirculation system cooler 130 is commonly used in the internal combustion engine 20 to cool the internal combustion engine 20 as well. The coolant C circulates in the interior of the exhaust gas recirculation system cooler 130 and the interior of the internal combustion engine 20 so as to cool exhaust gas G flowing in the exhaust gas recirculation system cooler 130 and the internal combustion engine 20.

The second embodiment can provide the same advantage as that provided by the first embodiment. Further, when the internal combustion engine 20 is in the cold state, exhaust gas G which is heated with good efficiency by a cover member 90 flows in the exhaust gas recirculation system cooler 130. Because of this, the coolant C which flows in the exhaust gas recirculation system cooler 130 is heated by the exhaust gas G, and therefore, the internal combustion engine 20 can be warmed up.

When the internal combustion engine 20 is in the warmed-up state, exhaust gas G which is heated by the catalytic reaction occurring when exhaust gas G passes through the catalyst 72 are cooled by the exhaust gas recirculation system cooler 130, whereby a large amount of exhaust gas G can be supplied to combustion chambers 21 to 24.

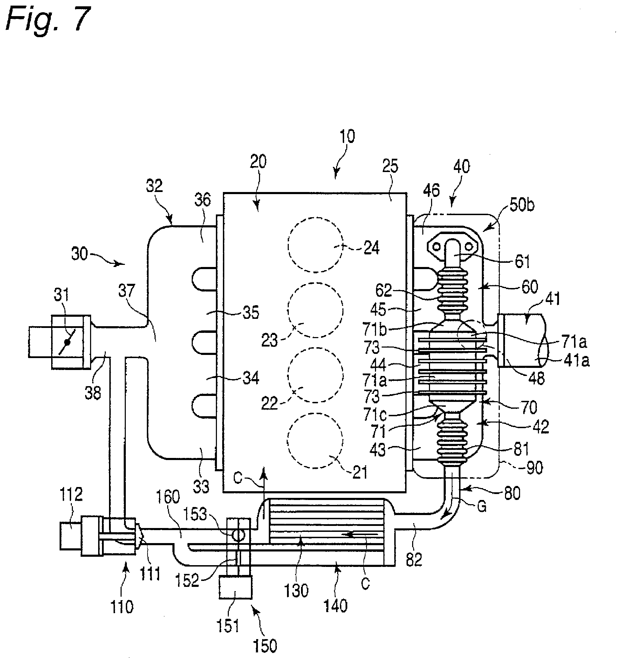

Next, referring to Fig. 7, an exhaust gas recirculation system according to a third embodiment of the invention will be described. Like reference numerals are given to like functional configurations to those of the second embodiment, and the description thereof will be omitted. The third embodiment differs from the second embodiment in that an exhaust gas recirculation system cooler bypass line 140 and a flow line switching valve unit 150 are provided. The other constructions remain the same as those of the second embodiment. The different feature will be described specifically.

Reference numeral 50b is given to the exhaust gas recirculation system of this embodiment. As has been described above, the exhaust gas recirculation system 50b differs from the exhaust gas recirculation system 50a descried in the second embodiment only in that the exhaust gas recirculation system cooler bypass line 140 and the flow line switching valve unit 150 are provided. The other constructions of the exhaust gas recirculation system 50b remain the same as those of the exhaust gas recirculation system 50a of the second embodiment.

Fig. 7 is a schematic diagram showing the exhaust gas recirculation system 50b. As Fig. 7 shows, the exhaust gas recirculation system 50b includes the exhaust gas recirculation system cooler bypass line 140 and the flow line switching valve unit 150.

The exhaust gas recirculation system cooler bypass line 140 makes up part of a downstream-side exhaust gas recirculation passage 80. The exhaust gas recirculation system cooler bypass line 140 bypasses an exhaust gas recirculation system cooler 130. Specifically speaking, an upstream end of the exhaust gas recirculation system cooler bypass line 140 communicates with a second connecting passage portion 82 in a position lying further upstream than the exhaust gas recirculation system cooler 130. A downstream end of the exhaust gas recirculation system cooler bypass line 140 communicates with the second connecting passage portion 82 in a position lying further downstream than the exhaust gas recirculation system cooler 130.

The flow line switching valve unit 150 includes a driving portion 151, a first valve 152, and a second valve 153. The driving portion 151 can drive the first and second valves 152, 153. As an example, the driving portion 151 is made up of an electric motor which can open and close the first and second valves 152, 153 or can control the openings of the first and second valves 152, 153.

The first valve 152 is provided within the exhaust gas recirculation system cooler bypass line 140. The first valve 152 can not only open and close the exhaust gas recirculation system cooler bypass line 140 but also control the opening of the exhaust gas recirculation system cooler bypass line 140. The second valve 153 is provided along the length of the downstream-side exhaust gas recirculation passage 80 in a position which lies downstream of the exhaust gas recirculation cooler 130 and further upstream than a merging portion 160 of the exhaust gas recirculation system cooler bypass line 140. The second valve 153 can open and close a portion of the downstream-side exhaust gas recirculation passage 80 which lies further downstream than the exhaust gas recirculation system cooler 130 and can also control the opening of the same portion. The exhaust gas recirculation system cooler bypass line 140 constitutes an example of a bypass passage which bypasses the exhaust gas recirculation system cooler 130.

The third embodiment can provide the same advantage as that provided by the second embodiment. In addition, when the internal combustion engine 20 is in the cold state, a door member 101 is put in a closed state P2, and exhaust gas G is caused to bypass the exhaust gas recirculation system cooler 130, that is, the second valve 153 is closed whereas the first valve 152 is opened, so as to guide exhaust gas G to the exhaust gas recirculation system cooler bypass line 140, whereby the resulting heated exhaust gas G can be supplied to combustion chambers 21 to 24.

In addition, when the internal combustion engine 20 is in the warmed-up state, the activation of a catalyst 72 can be maintained by controlling the opening of the door member 101. In addition, the amount of exhaust gas G which passes through the exhaust gas recirculation system cooler 130 can be controlled by controlling the openings of the first and second valves 152, 153. Therefore, the amount of exhaust gas G supplied to the combustion chambers 21 to 24 can be controlled finely.

## Claims

1. An exhaust gas recirculation system comprising:
an exhaust manifold (42), communicating with a combustion chamber (21, 22, 23, 24) of an internal combustion engine, and forming a part of an exhaust system;
an exhaust gas recirculation passage (120) for guiding exhaust gas from the exhaust system (40) to an induction passage (38);
a catalytic converter (70), provided in the exhaust gas recirculation passage (120), and disposed in a position which is spaced away from the exhaust manifold (42) and where at least part of the catalytic converter (70) is superposed above the exhaust manifold (42) in a vertical direction of a vehicle body; **characterized in that**,
a cover member (90), covers the exhaust manifold (42) and the catalytic converter (70), and
the cover member (90) includes a vertical wall (95) which is disposed on an opposite side to the internal combustion engine and extends downward at least to a position of a lower end of the exhaust manifold (42) in the vertical direction.

2. The exhaust gas recirculation system according to claim 1, wherein
the internal combustion engine includes at least two combustion chambers (21, 22, 23, 24),
the exhaust manifold (42) includes: branch portions (43, 44, 45, 46) which communicate correspondingly with the combustion chambers; and a merging portion (48) where the branch portions merge together, and
at least part of the catalytic converter (70) is superposed above the merging portion in the vertical direction of the vehicle body.

3. The exhaust gas recirculation system according to claims 1 or 2, wherein
the catalytic converter (70) includes at least one fin (73) which is exposed inside the cover member.

4. The exhaust gas recirculation system according to any one of claims 1 to 3, wherein
the exhaust gas recirculation passage (120) includes a corrugated passage (62, 81) portion having a corrugated shape at least either upstream or downstream of the catalytic converter (70).

5. The exhaust gas recirculation system according to claim 4, wherein
the corrugated passage portion (62, 81) communicates with the catalytic converter at each of an upstream and downstream of the catalytic converter (70).

6. The exhaust gas recirculation system according to any one of claims 1 to 5, further comprising:
a cooling unit (130), configured to commonly use a coolant for cooling the combustion chambers (21, 22, 23, 24), and provided in the exhaust gas recirculation passage (120) so as to cool the exhaust gas.

7. The exhaust gas recirculation system according to claim 6, wherein
the exhaust gas recirculation passage includes a bypass passage (140) which bypasses the cooling unit.

8. The exhaust gas recirculation system according to claim 1 or 3, further
comprising:
an opening and closing unit (100), wherein
the cover member (90) is formed with an opening (91),
the opening and closing unit (100) opens and closes the opening (91), and
the opening and closing unit (100) includes a door member (101) which covers the opening (91).

## Patentansprüche

1. Abgasrückführsystem mit:
einem Abgasverteiler (42), der mit einer Verbrennungskammer (21, 22, 23, 24) eines Verbrennungsmotors kommuniziert und einen Teil eines Abgassystems bildet;
einem Abgasrückführkanal (120) zum Leiten von Abgas vom Abgassystem (40) zu einem Induktionskanal (38);
einem Katalysator (70), der im Abgasrückführkanal (120) vorgesehen ist und an einer Position angeordnet ist, die vom Abgasverteiler (42) beabstandet ist, und wobei mindestens ein Teil des Katalysators (70) in einer vertikalen Richtung einer Fahrzeugkarosserie über dem Abgasverteiler (42) angeordnet ist;
**dadurch gekennzeichnet, dass**
ein Abdeckelement (90) den Abgasverteiler (42) und den Katalysator (70) abdeckt; und
das Abdeckelement (90) eine vertikale Wand (95) aufweist, die auf einer dem Verbrennungsmotor gegenüberliegenden Seite angeordnet ist und sich in der vertikalen Richtung mindestens bis zu einer Position eines unteren Endes des Abgasverteilers (42) nach unten erstreckt.

2. Abgasrückführsystem nach Anspruch 1, wobei
der Verbrennungsmotor mindestens zwei Verbrennungskammern (21, 22, 23, 24) aufweist,
der Abgasverteiler (42) Zweigabschnitte (43, 44, 45, 46), die mit den entsprechenden Verbrennungskammern kommunizieren, und einen Vereinigungsabschnitt (48) aufweist, an dem die Zweigabschnitte sich vereinigen, und
mindestens ein Teil des Katalysators (70) in der vertikalen Richtung der Fahrzeugkarosserie über dem Vereinigungsabschnitt angeordnet ist.

3. Abgasrückführsystem nach Anspruch 1 oder 2, wobei
der Katalysator (70) mindestens eine Rippe (73) aufweist, die innerhalb des Abdeckelements freiliegt.

4. Abgasrückführsystem nach einem der Ansprüche 1 bis 3, wobei
der Abgasrückführkanal (120) einen gerippten Kanalabschnitt (62, 81) aufweist, der mindestens stromaufwärts und/oder stromabwärts vom Katalysator (70) eine gerippte Form aufweist.

5. Abgasrückführsystem nach Anspruch 4, wobei der gerippte Kanalabschnitt (62, 81) mit dem Katalysator stromaufwärts und stromabwärts vom Katalysator (70) kommuniziert.

6. Abgasrückführsystem nach einem der Ansprüche 1 bis 5, ferner mit:
einer Kühleinheit (130), die dafür konfiguriert ist, ein Kühlmittel zum Kühlen der Verbrennungskammern (21, 22, 23, 24) gemeinsam zu verwenden und im Abgasrückführkanal (120) angeordnet ist, um das Abgas zu kühlen.

7. Abgasrückführsystem nach Anspruch 6, wobei
der Abgasrückführkanal einen Umgehungskanal (140) aufweist, der die Kühleinheit umgeht.

8. Abgasrückführsystem nach Anspruch 1 oder 3, ferner mit:
einer Öffnungs- und Schließeinheit (100), wobei
das Abdeckelement (90) mit einer Öffnung (91) ausgebildet ist,
die Öffnungs- und Schließeinheit (100) die Öffnung (91) öffnet und schließt, und
die Öffnungs- und Schließeinheit (100) ein Türelement (101) aufweist, das die Öffnung (91) abdeckt.

## Revendications

1. Système de recirculation de gaz d'échappement comprenant :
un collecteur d'échappement (42), qui communique avec une chambre de combustion (21, 22, 23, 24) d'un moteur à combustion interne, et qui constitue une partie d'un système d'échappement ;
un passage de recirculation de gaz d'échappement (120) pour guider les gaz d'échappement en provenance du système d'échappement (40) jusqu'à un passage d'induction (38) ;
un convertisseur catalytique (70), qui est prévu dans le passage de recirculation de gaz d'échappement (120), et qui est disposé en une position qui est espacée du collecteur d'échappement (42) et dans lequel au moins une partie du convertisseur catalytique (70) est superposée au-dessus du collecteur d'échappement (42) dans une direction verticale d'un corps de véhicule ; **caractérisé en ce que**,
un élément de recouvrement (90) recouvre le collecteur d'échappement (42) et le convertisseur catalytique (70), et
l'élément de recouvrement (90) inclut une paroi verticale (95) qui est disposée sur un côté opposé au moteur à combustion interne et qui s'étend vers le bas au moins jusqu'à une position d'une extrémité inférieure du collecteur d'échappement (42) dans la direction verticale.

2. Système de recirculation de gaz d'échappement selon la revendication 1, dans lequel :
le moteur à combustion interne inclut au moins deux chambres de combustion (21, 22, 23, 24) ;
le collecteur d'échappement (42) inclut : des sections de dérivation (43, 44, 45, 46) qui communiquent de manière correspondante avec les chambres de combustion ; et une section de fusion (48) au niveau de laquelle les sections de dérivation fusionnent ensemble ; et
au moins une partie du convertisseur catalytique (70) est superposée au-dessus de la section de fusion dans la direction verticale du corps de véhicule.

3. Système de recirculation de gaz d'échappement selon la revendication 1 ou 2, dans lequel :
le convertisseur catalytique (70) inclut au moins une ailette (73) qui est exposée à l'intérieur de l'élément de recouvrement.

4. Système de recirculation de gaz d'échappement selon l'une quelconque des revendications 1 à 3, dans lequel :
le passage de recirculation de gaz d'échappement (120) inclut une section de passage cannelée (62, 81) qui présente une forme cannelée au moins soit en amont, soit en aval du convertisseur catalytique (70).

5. Système de recirculation de gaz d'échappement selon la revendication 4, dans lequel :
la section de passage cannelée (62, 81) communique avec le convertisseur catalytique au niveau de chaque côté parmi l'amont et l'aval du convertisseur catalytique (70).

6. Système de recirculation de gaz d'échappement selon l'une quelconque des revendications 1 à 5, comprenant en outre :
une unité de refroidissement (130), qui est configurée pour utiliser de façon commune un agent de refroidissement pour refroidir les chambres de combustion (21, 22, 23, 24), et qui est prévue dans le passage de recirculation de gaz d'échappement (120) de manière à refroidir les gaz d'échappement.

7. Système de recirculation de gaz d'échappement selon la revendication 6, dans lequel :
le passage de recirculation de gaz d'échappement inclut un passage de contournement (140) qui contourne l'unité de refroidissement.

8. Système de recirculation de gaz d'échappement selon la revendication 1 ou 3, comprenant en outre :
une unité d'ouverture et de fermeture (100), dans lequel :
l'élément de recouvrement (90) est formé de manière à comporter une ouverture (91) ;
l'unité d'ouverture et de fermeture (100) ouvre et ferme l'ouverture (91) ; et
l'unité d'ouverture et de fermeture (100) inclut un élément de porte (101) qui recouvre l'ouverture (91).
